# EUROPEAN PATENT SPECIFICATION

(11) **EP 4 103 505 B1**
(45) Date of publication and mention of the grant of the patent: **07.10.2026**
(21) Application number: 20821301.7
(22) Date of filing: 15.12.2020
(51) Int. Cl.: B66C 1/40, B66C 15/06, B66C 17/10

(54) **LIFTING SYSTEM**
HUBSYSTEM
SYSTÈME DE LEVAGE

(30) Priority: 11.02.2020 EP 20156676
(43) Date of publication of application: 21.12.2022
(73) Proprietor: Tata Steel IJmuiden B.V., 1951 JZ Velsen-Noord (NL)
(72) Inventor: STAM, Peter, 1970 CA IJMUIDEN (NL)
(74) Representative: Group Intellectual Property Services
(86) International application number: PCT/EP2020/086284
(87) International publication number: WO 2021/160324

(56) References cited:
- AU-A1- 2018 427 246
- DE-B4- 102013 017 803
- GB-A- 2 000 870

## Description

The present invention relates to a lifting system for a metallurgical plant. It further relates to a detection system.

Lifting systems are an integral part in a metallurgical plant. In the basic oxygen furnace (BOF) process, lifting and transport of hot metal ladles may occur hundreds of time. During this discontinuous process the hot metal is subjected to a pre-treatment, a primary metallurgical treatment, a secondary metallurgical treatment and casted. All these steps required the lifting and transport of the hot metal in ladles by a crane. In addition, the scrap chutes are also handled by crane. For the safety and continuity of the steel works, it is crucial that the crane and ladles are properly aligned during lifting and transporting. The crane-operator has to ensure that the hooks of the crane are properly arranged around the lugs of the ladle before lifting. Some major accidents have happened in the steel industry as a result of badly aligned lifting systems.

In order to reduce human error leading to misalignment and casualties, a detection system for the correct alignment of the crane and ladle is desirable. Due to the harsh conditions in the BOF plant, including elevated temperatures and a dusty environment, the robustness of the detection system is crucial.

DE102013017803B4 discloses a misalignment system for a crane having two hooks connected via a crossbeam, the hooks being designed to receive a component, and the misreading system being a magnetic flux introduction device, a magnetic flux detection device and an electronic device connectable to the magnetic flux detection device , for detecting the magnetic flux detected at the magnetic flux detecting device.

The device of DE102013017803B4 is a complex device requiring multiple components. It will require a wired connection between the object to be lifted and the crane. In addition, it will be unclear which side of the object is misaligned in the device of the prior art.

It is therefore desirable to provide a lifting device that can detect the alignment of the crane and the object to be lifted without the need for complex wired components.

It is thus an object of this invention to provide a lifting device with a robust detection system.

The object is solved by the subject matter of the independent claim. Advantageous embodiments are given in the dependent claims and the description.

In a first aspect of the invention there is provided a lifting system for a metallurgical plant comprising an object with one or more trunnions and a lifting device with one or more lifting hooks for receiving the trunnions, wherein the lifting system further comprises a detection system, the detection system comprising a receiver unit, a sensor unit, a magnet and a transmitter unit, wherein the magnet and the sensor unit are aligned upon correct alignment of the lifting hook and the trunnion such that a signal is submitted to the receiver unit.

Advantageously, the detection system is configured such that the sensor unit will detect a change in the magnetic field due to the correct alignment of the object and the lifting device. By placing a sensor unit in the hook and a magnet on the object, or vice versa, the magnet and the sensor unit align when the trunnion and lifting hook are correctly engaged. The sensor unit will detect a change in the magnetic field and triggers the transmitter unit to send a signal to the receiver unit, typically located in the crane control system, such that the control system will know that the hooks are properly hooked in. The detection system thus provides information to the control unit, for example a Boolean true false result which can easily be interpreted by a control unit. This can result in a warning at the human machine interface (HMI) for the operator or could be used directly to disable hoisting in an unsafe situation.

The present invention thus provides a lifting device with a robust and simple detection system. The object is not particularly limited, and may be any container that needs to be lifted, for example a hot metal ladle or a scrap chute. The lifting device is typically an overhead travelling crane.

The magnet, sensor unit and transmitter unit are not particularly limited, but should preferably be able to withstand harsh conditions common in a metallurgical plant, such as elevated temperatures, dusty environment and shock impact. The sensor unit may comprise a hall effect sensor or a reed switch. The sensor unit and transmitter unit are preferably operating on a battery, such that the system does not require a power cable.

According to the invention the magnet is a permanent magnet, such that it creates its own persistent magnetic field. This is preferred as no electrical current is needed to operate the magnet.

The strength of the magnet and the sensitivity of the sensor unit both determine the distance wherein a signal will be submitted. In an embodiment according to the invention, the magnet has a remanence of at least 3000 Gauss. At a remanence of at least 3000 Gauss, the sensor unit can be activated at a minimum distance of 0 mm and a maximum distance of 500 mm and will be deactivated when the magnet and sensor unit are more than 100 mm misaligned. In this range there is sufficient room to mount the sensor unit and transmitter unit on the hook and the magnet on the object while maintaining a good threshold for the sensor unit.

In an embodiment according to the invention, the distance between the magnet and sensor unit upon correct alignment is at most 200 mm. At a distance over 200 mm the size and/or the remanence of the magnet needs to be increased, which makes the placement of the magnet more difficult and will result in a system which is less accurate.

In an embodiment according to the invention, the threshold for a submission of the signal to the receiver unit is at least 3 milliTesla Below 3 milliTesla, the fitting of the magnet, sensor unit and transmitter unit to the object and lifting device becomes less practical as they need to be placed closer to the location where the hook and trunnion engage. In addition, this will increase the shock load implied on the detection system, which might result in damage to the system.

The configuration of the elements of the detection system is not particularly limited. Preferably the magnet is located at the outer side of the object. This ensures that the magnet has no direct contact with the material in the object. Preferably the magnet is located adjacent to the trunnion of the object, as this location is in close proximity of the interaction point of the trunnion and the hook.

When handling hot metal, the outer side of a ladle may reach temperatures up to 200 °C, and the hook may reach temperatures up to 70 °C. Therefore, the magnet is preferably located at the object and the sensor unit and transmitter unit are preferably located at the hook, as a magnet can withstand higher temperatures than a sensor unit and a transmitter unit.

In a preferred embodiment, the sensor unit is arranged at the inner side of the hook and the transmitter unit is arranged at the outer side of the hook. The inner side of the hook is defined as the side of the hook being closest to the object. The transmitter unit and sensor unit may be coupled via a cable, through a canal in the hook to transfer the signal. As transmitter units are generally more sensitive than sensor units, the transmitter unit is preferably placed at the outer side of the hook, which will have a lower operating temperature and less shock impact, and hence improves the durability of the detection system.

According to the invention the lifting system comprises a sensor unit, a transmitter unit and a magnet for each trunnion / hook pair. In this way, no visual inspection is needed at all from an operator to check correct engagement of the hooks and trunnion.

In a preferred embodiment each sensor unit comprises at least one hall sensor. A hall sensor can be unipolar which provides additional flexibility for mounting the magnet to the object. In addition, hall sensors can reach a high sensitivity and can be used at operating temperatures up to 150°C.

In a preferred embodiment each sensor unit comprises at least two sensors, the transmitter unit comprises at least two transmitters and the receiver unit comprises at least two receivers. Both at the transmitter unit and the receiver unit the signal is compared. If a signal is only received by one of the transmitters and/or receivers, the system will be able to provide a warning. By using such a lay out, the detection system is failsafe, making the system extra robust.

In an embodiment the transmitter unit and receiver unit are wirelessly connected. The signal are preferably submitted via radio waves, e.g. wlan, such that a cable between the transmitter unit and receiver unit is not required.

In a further embodiment the detection system also comprises an object weighing unit. The weighing unit can detect if the object is in an empty or charged state. In such configuration, the HMI will receive not only the standard information about the movement of the lifting device, but also about the weight of the object and about the alignment of the lifting hook with the object. As such, the HMI can provide a complete picture of the ongoing operations in the plant.

In another aspect of the invention there is provided a detection system for a lifting system, comprising a magnet, a sensor unit, a transmitter unit and a receiver unit. Such a system can be installed on existing lifting systems as an aftermarket solution. The magnet, sensor unit and transmitter unit are not particularly limited, but should preferably be able to withstand harsh conditions common in a metallurgical plant, such as elevated temperatures, dusty environment and shock impact. The sensor unit may comprise a hall effect sensor or a reed switch. The sensor unit and transmitter unit are preferably operating on a battery, such that the system does not require a power cable.

According to the invention the magnet is a permanent magnet, such that it creates its own persistent magnetic field. This is preferred as no electrical current is needed to operate the magnet.

The strength of the magnet and the sensitivity of the sensor unit both determine the distance wherein a signal will be submitted. In an embodiment according to the invention, the magnet has a remanence of at least 3000 Gauss. At a remanence of at least 3000 Gauss, the sensor unit can be activated at a minimum distance of 0 mm and a maximum distance of 500 mm and will be deactivated when the magnet and sensor are more than 100 mm misaligned. In this range there is sufficient room to mount the sensor unit and transmitter unit on the hook and the magnet on the object while maintaining a good threshold for the sensor unit.

In an embodiment according to the invention, the distance between the magnet and sensor unit upon correct alignment is at most 200 mm. At a distance over 200 mm the size and/or the remanence of the magnet needs to be increased, which makes the placement of the magnet more difficult and will result in a system which is less accurate.

In an embodiment according to the invention, the threshold for a submission of the signal to the receiver unit is at least 2 milliTesla Below 2 milliTesla, the fitting of the magnet, sensor unit and transmitter unit to the object and lifting device becomes less practical as they need to be placed closer to the location where the hook and trunnion engage. In addition, this will increase the shock load implied on the detection system, which might result in damage to the system.

In a preferred embodiment each sensor unit comprises at least two sensors, the transmitter unit comprises at least two transmitters and the receiver unit comprises at least two receivers. Both at the transmitter and the receiver the signal is compared. If a signal is only received by one of the transmitters and/or receivers, the system will be able to provide a warning. By using such a lay out, the detection system is failsafe, making the system extra robust.

In an embodiment the transmitter unit and receiver unit are wirelessly connected. The signal are preferably submitted via radio waves, e.g. wlan, such that a cable between the transmitter unit and receiver unit is not required.

In a further embodiment the detection system also comprises an object weighing unit. The weighing unit can detect if the object is in an empty or charged state and may be used to signal a safe situation wherein the hook and trunnion are not aligned.

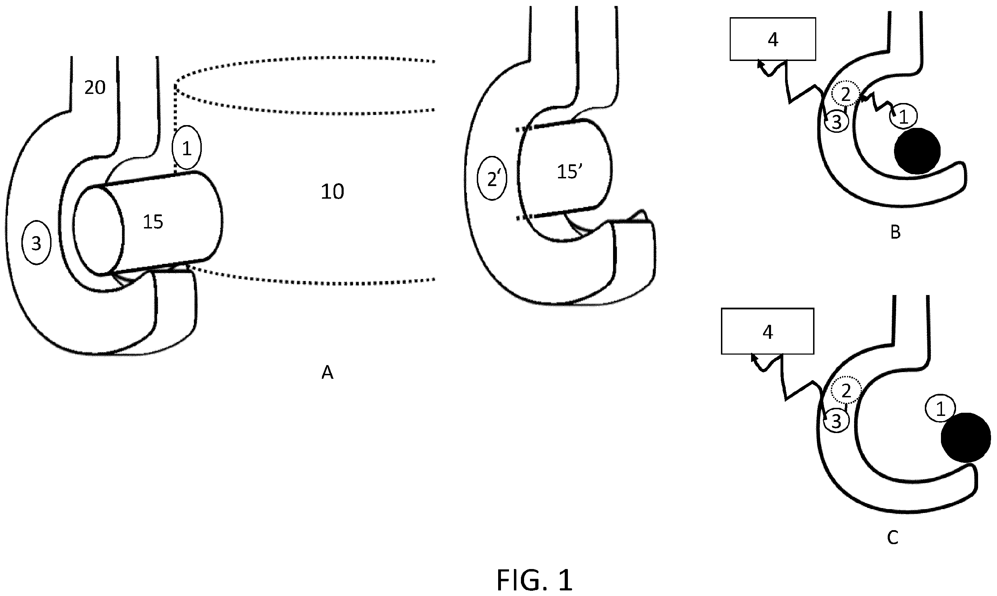

The invention is further explained by the non-limiting example shown in FIG 1.

FIG. 1A shows object 10, which is a hot metal ladle (partially shown), comprising two trunnions 15, 15'. Adjacent of the trunnions permanent magnets 1, 1'(not shown) are installed. Both magnets are ferrite magnets with a remanence of 4000 Gauss, with a size of 150x100x50 mm. At the inner side of each hook 20, 20' a sensor unit 2, 2' is installed. The sensor units have a unipolar hall sensor that will be activated at a distance between 0 and 178mm and deactivated at a distance larger than 428mm or a misalignment of 100mm. The threshold of the sensor unit is 3 milliTesla. The transmitter unit, comprising a microprocessor is mounted to the outer side of the hook. The transmitter unit and sensor unit are connected by a cable and charged with a battery. In FIG. 1B the hook and trunnion are in a correct alignment, leading to a positive wireless feedback signal from the transmitter unit to the receiver unit 4. In FIG. 1C, the hook and trunnion are not correctly aligned, if the system would start lifting, dangerous situation might arise. However, due to the faulty alignment of the hook and trunnion, the magnet will not set of the sensor unit and will be below the threshold. As such, no positive feedback signal will be submitted to the receiver unit and a warning message will be displayed on the HMI.

## Claims

1. A lifting system for a metallurgical plant comprising an object (10) with one or more trunnions (15, 15')
and a lifting device with one or more lifting hooks (20, 20') for receiving the trunnions, wherein the
lifting system further comprises a detection system, the detection system comprising a receiver unit (4), a sensor unit (2, 2'), **a** magnet (1, 1') and a transmitter unit (3), and wherein said magnet and said sensor unit are aligned upon correct alignment of at least one lifting hook and one trunnion such that a signal is submitted to the receiver unit, **characterised in that** said magnet is a
permanent magnet and wherein each lifting hook comprises a sensor unit and transmitter unit and wherein the object comprises a said magnet for each trunnion.

2. The lifting system according to claim 1, wherein the object comprises a pair of trunnions and the lifting device comprises a pair of lifting hooks.

3. The lifting system according to claim 2, wherein the object is a hot metal ladle.

4. The lifting system according to any of the claims above, wherein the magnet has a remanence of at least 3000 Gauss.

5. The lifting system according to any of the claims above, wherein the magnet is mounted at the outer side of the object.

6. The lifting system according to any of the claims above, wherein the object comprises a magnet adjacent to each trunnion.

7. The lifting system according to any of the claims above, wherein the distance between the magnet and sensor unit upon correct alignment is at most 200 mm.

8. The lifting system according to any of the claims above, wherein the threshold of the sensor unit is at least 2 milliTesla.

9. The lifting system according to any of the claims above, wherein the sensor unit is arranged at the inside of the hook.

10. The lifting system according to any of the claims above, wherein the transmitter unit is arranged at the outside of the hook.

11. The lifting system according to any of the claims above, wherein the transmitter unit and receiver unit are wirelessly connected.

12. The lifting system according to any of the claims above further comprising an object weighing unit.

13. The lifting system according to any of the claims above, wherein each sensor unit comprises at least one hall sensor, preferably at least two hall sensors.

## Patentansprüche

1. Hubsystem für eine metallurgische Anlage, umfassend ein Objekt (10) mit einem oder mehreren Zapfen (15, 15') und eine Hubvorrichtung mit einem oder mehreren Hubhaken (20, 20') zum Aufnehmen der Zapfen, wobei das Hubsystem ferner ein Detektionssystem umfasst, wobei das Detektionssystem eine Empfängereinheit (4), eine Sensoreinheit (2, 2'), einen Magneten (1, 1') und eine Sendereinheit (3) umfasst und wobei der Magnet und die Sensoreinheit bei korrekter Ausrichtung mindestens eines Hubhakens und eines Zapfens so ausgerichtet sind, dass ein Signal an die Empfängereinheit übermittelt wird, **dadurch gekennzeichnet, dass** der Magnet ein Permanentmagnet ist und wobei jeder Hubhaken eine Sensoreinheit und eine Sendereinheit umfasst und wobei das Objekt einen Magneten für jeden Zapfen umfasst.

2. Hubsystem nach Anspruch 1, wobei das Objekt ein Paar von Zapfen umfasst und die Hubvorrichtung ein Paar von Hubhaken umfasst.

3. Hubsystem nach Anspruch 2, wobei das Objekt eine Heißmetallpfanne ist.

4. Hubsystem nach einem der obigen Ansprüche, wobei der Magnet eine Remanenz von mindestens 3000 Gauss aufweist.

5. Hubsystem nach einem der obigen Ansprüche, wobei der Magnet an der Außenseite des Objekts montiert ist.

6. Hubsystem nach einem der obigen Ansprüche, wobei das Objekt einen Magneten benachbart zu jedem Zapfen umfasst.

7. Hubsystem nach einem der obigen Ansprüche, wobei der Abstand zwischen dem Magneten und der Sensoreinheit bei korrekter Ausrichtung höchstens 200 mm beträgt.

8. Hubsystem nach einem der obigen Ansprüche, wobei die Schwelle der Sensoreinheit mindestens 2 Millitesla beträgt.

9. Hubsystem nach einem der obigen Ansprüche, wobei die Sensoreinheit an der Innenseite des Hakens angeordnet ist.

10. Hubsystem nach einem der obigen Ansprüche, wobei die Sendereinheit an der Außenseite des Hakens angeordnet ist.

11. Hubsystem nach einem der obigen Ansprüche, wobei die Sendereinheit und die Empfängereinheit drahtlos verbunden sind.

12. Hubsystem nach einem der obigen Ansprüche, ferner umfassend eine Objektwiegeeinheit.

13. Hubsystem nach einem der obigen Ansprüche, wobei jede Sensoreinheit mindestens einen Hallsensor, bevorzugt mindestens zwei Hallsensoren, umfasst.

## Revendications

1. Système de levage destiné à une installation métallurgique comprenant un objet (10) pourvu d'un ou de plusieurs tourillons (15, 15')
et un dispositif de levage pourvu d'un ou de plusieurs crochets de levage (20, 20') destinés à recevoir les tourillons, dans lequel le système de levage comprend en outre un système de détection, le système de détection comprenant une unité de réception (4), une unité de détection (2, 2'), un aimant (1, 1') et une unité d'émission (3), et dans lequel ledit aimant et ladite unité de détection sont alignés lors de l'alignement correct d'au moins un crochet de levage et d'un tourillon de sorte qu'un signal soit soumis à l'unité de réception, **caractérisé en ce que** ledit aimant est un aimant permanent et dans lequel chaque crochet de levage comprend une unité de détection et une unité d'émission et dans lequel ledit objet comprend un dit aimant pour chaque tourillon.

2. Système de levage selon la revendication 1, dans lequel l'objet comprend une paire de tourillons et le dispositif de levage comprend une paire de crochets de levage.

3. Système de levage selon la revendication 2, dans lequel l'objet est une poche de métal chaud.

4. Système de levage selon l'une quelconque des revendications précédentes, dans lequel l'aimant présente une rémanence d'au moins 3000 Gauss.

5. Système de levage selon l'une quelconque des revendications précédentes, dans lequel l'aimant est monté sur le côté extérieur de l'objet.

6. Système de levage selon l'une quelconque des revendications précédentes, dans lequel l'objet comprend un aimant adjacent à chaque tourillon.

7. Système de levage selon l'une quelconque des revendications précédentes, dans lequel la distance entre l'aimant et l'unité de détection lors d'un alignement correct est d'au plus 200 mm.

8. Système de levage selon l'une quelconque des revendications précédentes, dans lequel le seuil de l'unité de détection est d'au moins 2 milliTesla.

9. Système de levage selon l'une quelconque des revendications précédentes, dans lequel l'unité de détection est agencée à l'intérieur du crochet.

10. Système de levage selon l'une quelconque des revendications précédentes, dans lequel l'unité d'émission est agencée à l'extérieur du crochet.

11. Système de levage selon l'une quelconque des revendications précédentes, dans lequel l'unité d'émission et l'unité de réception sont connectées sans fil.

12. Système de levage selon l'une quelconque des revendications précédentes, comprenant en outre une unité de pesage d'objet.

13. Système de levage selon l'une quelconque des revendications précédentes, dans lequel chaque unité de détection comprend au moins un capteur à effet Hall, de préférence au moins deux capteurs à effet Hall.
